## Europäisches Patentamt
## European Patent Office
## Office européen des brevets

(19)

(11) Numéro de publication: **0 060 220**
**B1**

(12) FASCICULE DE BREVET EUROPEEN

(45) Date de publication du fascicule du brevet:
**24.07.85**

(51) Int. Cl.⁴: **H 04 N 17/00, H 04 N 7/18**

(21) Numéro de dépôt: **82810092.5**

(22) Date de dépôt: **02.03.82**

(54) **Dispositif pour la génération d'une mire sur un écran de moniteur vidéo.**

(30) Priorité: **06.03.81 CH 1514/81**

(43) Date de publication de la demande:
**15.09.82 Bulletin 82/37**

(45) Mention de la délivrance du brevet:
**24.07.85 Bulletin 85/30**

(84) Etats contractants désignés:
**CH DE FR GB IT LI NL**

(56) Documents cités:
**US - A - 2 621 246**
**US - A - 3 793 483**
**US - A - 4 259 725**

(73) Titulaire: **Les Fabriques d'Assortiments Réunies, 57, rue Girardet, CH-2400 Le Locle (CH)**

(72) Inventeur: **Vuilleme, Frédy, Croix Fédérale 24, CH-2300 La Chaux-de-Fonds (CH)**
Inventeur: **Jeanneret, Charles Albert, Etangs 2, CH-2400 Le Locle (CH)**

(74) Mandataire: **Gresset, Jean et al, ASUAG Département Brevets et Licences Faubourg du Lac 6, CH-2501 Bienne (CH)**

ACTORUM AG

## Description

La présente invention concerne un dispositif pour la génération sur un écran de moniteur vidéo d'une mire formée de lignes horizontales et verticales dont la position sur l'écran est parfaitement définie et susceptible d'être prédéterminée.

Un tel dispositif est particulièrement utile pour déterminer de façon précise la position exacte d'une pièce, selon deux axes perpendiculaires correspondants à ceux de la mire. Dans ce but, on visualise simultanément sur l'écran du moniteur une image de la pièce obtenue à l'aide d'une caméra de télévision et la mire générée par le dispositif. S'il existe un décalage de translation entre deux lignes perpendiculaires de référence choisies sur la pièce et deux lignes perpendiculaires correspondantes de la mire, générées sur l'écran de façon à occuper une position parfaitement définie, il suffit de faire se déplacer ces lignes de mire de façon à ce qu'elles se superposent aux lignes de référence de la pièce. La valeur des déplacements des lignes de mire selon les deux directions perpendiculaires, qui est représentative du décalage de la pièce par rapport à une position de référence, peut alors être utilisée pour commander soit une correction de la position de la pièce, soit par exemple une correction du positionnement d'un outil prévu pour venir travailler la pièce dont la position n'est alors pas corrigée.

Cet exemple particulier montre combien il est important pour ce type d'application de pouvoir générer une mire comportant des lignes dont la position sur l'écran puisse être prédéterminée de façon précise. Ceci autorise non seulement une plus grande netteté de la mire qui facilite les opérations d'alignement, mais également une quantification très fine des déplacements de la mire effectués au cours de ces opérations.

La précision des dispositifs utilisés à l'heure actuelle pour la génération de mires se révèle limitée en raison même de leur principe de fonctionnement. Dans ces dispositifs en effet, l'instant du déclenchement des circuits qu'élaborent les signaux de visualisation des lignes de la mire est défini par exemple par un temps de retard après un signal de synchronisation vertical pour la génération des lignes horizontales de la mire, ou de synchronisation horizontale pour la génération sur chaque ligne d'un segment élémentaire composant une ligne verticale. Le réglage de ce temps de retard, ou les variations qu'on lui impose pour obtenir le positionnement des lignes de la mire en des endroits choisis de l'écran s'effectue en modifiant la valeur d'un paramètre particulier des circuits de temporisation prévus pour délivrer les signaux de déclenchement, par exemple en agissant sur une résistance électrique. On voit donc que la position des lignes de la mire sur l'écran est associée à une grandeur analogique, et que la précision du système est donc limitée par la précision de la détermination de cette grandeur.

Au contraire, le dispositif de l'invention permet de s'affranchir de l'imperfection des systèmes existants, en particulier en associant à la position de chaque ligne de la mire une valeur de référence numérique. Cette solution permet non seulement d'accroître la précision d'un positionnement obtenu au moyen du dispositif, mais également de faciliter la mise en œuvre d'un microprocesseur pour la commande des déplacements de la mire et leur exploitation ultérieure. Il est clair en effet que si les valeurs de référence utilisées sont des mots binaires à 8 bits par exemple, ils peuvent être aisément traités par microprocesseur, et mémorisés, appelés, modifiés, à volonté, en réponse à des instructions données par l'utilisateur du dispositif ou encore de façon automatique si on utilise par exemple un dispositif complémentaire de traitement d'image, pour réaliser un poste de positionnement automatique de pièces.

L'application de procédés numériques permettant de faire apparaître des figures sur un écran, est bien connue en soi. Par exemple le brevet US 4 259 725 décrit un équipement scanner pour le diagnostic médical dans lequel la technique numérique est utilisée pour former et déplacer de façon précise un curseur sur un écran de contrôle. Toutefois, dans ce document ne sont ni décrits ni même suggérés les moyens spécifiques de la présente invention qui permettent d'élaborer les lignes horizontales et verticales d'une mire à partir du déclenchement des circuits d'écriture d'une ligne horizontale ou verticale commandé par la comparaison avec des valeurs mémorisées du contenu de compteurs incrémentés ou remis à zéro au moyen des signaux de synchronisation, de blank et d'horloge. En particulier, les paires de compteurs du brevet cité contiennent des valeurs correspondant pour l'un à la position du début du curseur pour chaque ligne et pour l'autre à la largeur de ce même curseur. La présente invention permet au contraire de n'utiliser qu'un seul compteur pour une ligne horizontale ou verticale de la mire.

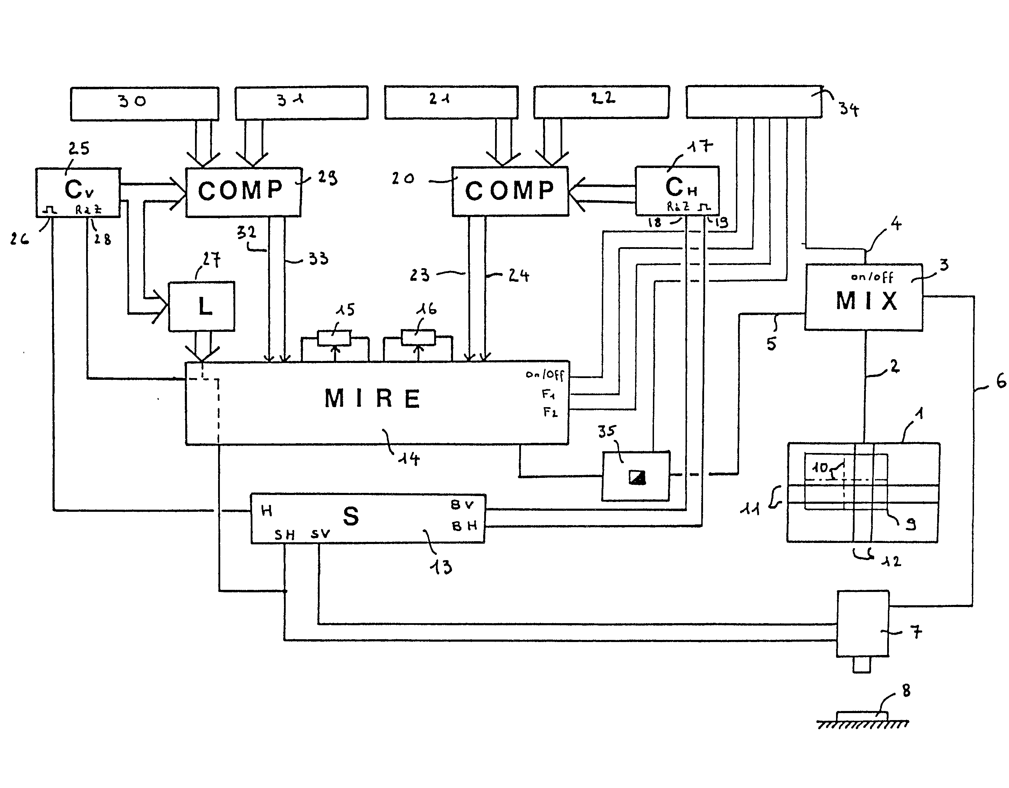

L'invention, telle que définie dans les revendications de la présente demande sera bien comprise à la lecture de la description suivante faite en relation avec la figure jointe qui représente de façon schématique et par blocs un mode de réalisation particulier d'un dispositif de génération de mire mis en œuvre dans une installation de repérage de la position d'une pièce.

On a représenté en 1 dans la figure un écran de moniteur vidéo commandé de façon classique par un signal composite 2 composé de signaux de synchronisation horizontale, verticale et d'un signal d'intensité de spot. Le signal composite 2 est formé dans un moyen de mixage 3 qui reçoit outre des instructions de marche/arrêt 4 un signal de mire 5 et un signal d'image 6. Le signal d'image 6 est délivré par une caméra 7 qui filme un objet 8 dont l'image 9 est représentée sur l'écran 1. L'objet 8 porte des lignes de référence horizontales et verticales 10. Sur l'écran 1 sont représentées en outre deux lignes horizontales 11 et deux lignes verticales 12 formant une mire.

Cette mire est générée sur l'écran 1 grâce au signal de mire 5 appliqué au moyen de mixage 3.

Pour la réalisation du signal de mire 5, le dispositif de l'invention comprend notamment un générateur de signaux de commande 13, un circuit 14 de formation du signal de mire, et des moyens pour déclencher au moment opportun la formation d'un signal de mire correspondant à l'une ou l'autre des lignes horizontales ou verticales de la mire.

Le générateur de signaux de commande 13 qui comporte notamment un quartz haute fréquence et des étages de division permet d'élaborer un signal de synchronisation horizontale (SH), un signal de synchronisation verticale (SV), un signal d'horloge (H) dont la fréquence est un multiple de celle des signaux de synchronisation et des signaux dits de blank vertical (BV) et de blank horizontal (BH).

Les signaux de blank BV et BH sont connus dans la technique de la commande des moniteurs vidéo, notamment dans les dispositifs générateurs de caractères. Le signal de blank vertical définit, pour chaque séquence de balayage complet de l'écran, le début des lignes de l'écran que l'on souhaite réserver à la visualisation de la mire. De même, le signal de blank horizontal définit, pour chaque séquence de balayage d'une ligne, la fin de celle-ci.

On notera à ce sujet que les signaux d'horloge, de synchronisation et de blank sont généralement délivrés par les circuits générateurs de caractères disponibles sur le marché, et par conséquent qu'un tel circuit peut avantageusement être substitué au générateur de signaux de commande 13 si l'on désire faire également apparaître à volonté des indications sur l'écran 1. Dans ce cas, la sortie du générateur de caractère serait également raccordée au moyen de mixage 3.

Le circuit 14 de formation du signal de mire comprend, de façon connue en soi, un circuit adapté pour délivrer, en réponse à un signal de déclenchement, un signal d'intensité de spot correspondant à la visualisation sur l'écran d'un nombre déterminé de lignes de balayage successives, ces lignes formant alors une ligne horizontale de mire d'épaisseur déterminée.

Pour la visualisation d'une ligne verticale de la mire, constituée par un empilement dans le sens vertical d'une série de segments élémentaires des lignes successives de l'écran, le circuit 14 comprend également un circuit adapté pour délivrer, en réponse à un signal de déclenchement, un signal d'intensité de spot commandant la visualisation sur l'écran de l'un de ces segments élémentaires, d'une longueur déterminée correspondant à l'épaisseur de la ligne verticale.

L'épaisseur des lignes horizontales ou verticales peut être réglée en agissant sur les moyens de réglage 15, respectivement 16.

Pour définir avec précision la position des lignes horizontales de la mire sur l'écran, le dispositif comprend un compteur 17 dont la fonction est de compter, pour chaque séquence de balayage complet de l'écran, le nombre de lignes balayées à partir du début de la zone de l'écran réservée à la visualisation de la mire. C'est pourquoi ce compteur est remis à zéro en 18 par le signal de blank vertical BV et incrémenté en 19 par le signal de blank horizontal, c'est-à-dire à la fin de chaque balayage de ligne. Un moyen de comparaison 20 compare à chaque instant le contenu du compteur 17 à une valeur de référence 21, 22 préalablement mémorisée et déterminée pour chaque ligne de mire horizontale de façon à correspondre au numéro de la première ligne de balayage de l'écran devant former une ligne horizontale de la mire. En cas de coïncidence, un signal de déclenchement 23, 24 est délivré au circuit 14 aui forme alors immédiatement un signal de mire permettant la visualisation d'une ligne de mire horizontale.

De la même façon, la définition précise de la position des lignes verticales de la mire sur l'écran est obtenue à l'aide d'un compteur 25 qui compte, pour chaque séquence de balayage horizontal, le nombre d'impulsions du signal d'horloge à partir du moment où le spot arrive au début d'une portion de la ligne de balayage réservée de façon arbitraire à la visualisation de la mire. A cet effet, le compteur 25, incrémenté au moyen du signal d'horloge H appliqué en 26 est remis à zéro une première fois par le signal de synchronisation horizontale SH, appliqué au circuit 14, puis une deuxième fois lorsque le contenu du compteur coïncide avec une valeur numérique de référence de largeur de marge mémorisée dans le dispositif de sélection de marge 27. Ce dispositif de sélection 27 agit sur le circuit 14 qui lui-même commande la borne de remise à zéro 28 du compteur 25.

Comme précédemment, un moyen de comparaison 29 compare en permanence le contenu du compteur 25 avec des valeurs numériques de référence 30, 31 préalablement mémorisées et représentatives chacune d'un nombre d'impulsions d'horloge séparant le moment où le spot arrive au début de la portion de chaque ligne de balayage réservée à la visualisation de la mire de celui où le spot arrive à l'endroit où il doit visualiser un segment élémentaire composant une ligne verticale. A chaque fois qu'une coïncidence se produit, un signal de déclenchement 32, 33 est envoyé au circuit 14 qui forme alors immédiatement un signal de mire permettant de visualiser un segment de ligne horizontale composant une ligne de mire verticale.

Le circuit 14 de formation du signal de mire permet également, en réponse à des instructions fournies à ces bornes $F_1$, $F_2$, de traiter le signal de mire de façon à faire apparaître sélectivement soit les deux lignes de mire verticales et les deux lignes de mire horizontale, dans leur totalité, soit les seules portions de chaque ligne de mire non comprises entre deux autres lignes perpendiculaires, soit encore les seules portions de chaque ligne de mire comprises entre deux autres lignes perpendiculaires. En alternant la première et la deuxième configuration, il apparaîtra sur l'écran une mire analogue à celle représentée sur la figure, sur laquelle le rectangle central disparaît et réapparaît alternativement.

Selon un mode de réalisation particulièrement intéressant de l'invention, les valeurs de référence mémorisées 21, 22, 30 et 31 sont accessibles, à l'aide d'un adressage adéquat, à des ports de sortie réservés à cet effet d'un dispositif à microprocesseur. Dans ce cas, il suffit de prévoir que ces valeurs soient données sous la forme de mots binaires de 8 bits, les compteurs 17 et 25 étant également des compteurs binaires de 8 bits. Les différentes manipulations, manuelles ou automatiques, de la mire nécessaires pour amener en correspondance les lignes de référence 10 de l'objet et les lignes de mire 11 et 12 sont alors obtenues en faisant varier par l'intermédiaire du microprocesseur, les valeurs de références 21, 22, 30 et 31 d'une quantité connue, ce qui provoque des déplacements bien définis des lignes de la mire. Le microprocesseur pourra alors traiter les informations correspondant aux variations des valeurs de référence pour commander directement par exemple le déplacement de la pièce 8, ou d'un outil prévu pour travailler celle-ci.

On notera également qu'on a représenté en 34 sur la figure un port de sortie de 8 bits supplémentaire du dispositif de commande par microprocesseur. Comme on le voit aisément, ce port de sortie permet de commander l'arrêt ou la marche du circuit 14 de formation du signal de mire, l'interruption du signal de caméra, la forme de la mire (entrées $F_1$, $F_2$ du circuit 14) et le mode de fonctionnement d'un circuit de contraste 35 dont l'objet est de traiter le signal de mire généré par le circuit 14 de manière à faire apparaître au choix des lignes de mire blanches ou noires sur l'écran du moniteur vidéo.

Enfin, on verra que la caméra 7 utilise les signaux de synchronisation SH et SV produits par le générateur de signaux de commande 13 et que par conséquent les signaux de synchronisation générés normalement par la caméra ne doivent pas être utilisés. Cette mesure est très intéressante car elle permet de s'affranchir de toute erreur due, entres autres, à une instabilité du générateur de signaux. Tout décalage d'une ou plusieurs lignes de balayage affectant en effet de la même façon le signal de mire et le signal de la caméra, les lignes de la mire et de l'image enregistrée par la caméra resteront donc toujours superposées.

**Revendications**

1. Dispositif pour la génération d'une mire sur un écran de moniteur vidéo afin de déterminer la position exacte d'un objet dont l'image est visualisée sur ce même écran, cette mire comportant au moins une ligne horizontale et une ligne verticale occupant sur l'écran une position précise prédéterminée et le moniteur étant commandé par un signal composite formé notamment d'un signal de synchronisation horizontale (SH), d'un signal de synchronisation verticale (SV) et d'un signal d'intensité du spot prévu pour régler le niveau de gris en tout point de l'écran, caractérisé en ce qu'il comprend:

– des moyens (13) pour élaborer, outre lesdits signaux de synchronisation.
· un signal de blank vertical (BV) définissant pour chaque séquence de balayage complet de l'écran, le début des lignes de l'écran réservées à la visualisation de la mire;
· un signal de blank horizontal (BH) définissant, pour chaque séquence de balayage d'une ligne, la fin de cette ligne; et
· un signal d'horloge (H) dont la fréquence est un multiple de celle des signaux de synchronisation;
– des moyens (14) pour générer un signal de mire, c'est-à-dire un signal d'intensité de spot commandant la visualisation de la mire sur l'écran, ces moyens comprenant:
· pour la visualisation d'une ligne horizontale de la mire, un circuit adapté pour délivrer, en réponse à un premier signal de déclenchement, un signal d'intensité de spot correspondant à la visualisation sur l'écran d'un nombre déterminé de lignes de balayage successives; et
· pour la visualisation d'une ligne verticale constituée par un empilement dans le sens vertical d'une série de segments élémentaires des lignes successives de l'écran, un circuit adapté pour délivrer, en réponse à un deuxième signal de déclenchement, un signal d'intensité de spot correspondant à la visualisation sur l'écran de l'un de ces segments élémentaires de longueur déterminée;
– des moyens de mémorisation pour mémoriser:
· une première valeur numérique de référence (21, 22) associée à la position de la ligne horizontale de la mire, cette valeur correspondant au numéro de la première ligne de balayage de l'cran formant la ligne horizontale de la mire, ces lignes de balayage étant comptées à partir de la première ligne définie par le signal de blank vertical; et
· une deuxième valeur numérique de référence (30, 31) associée à la position de chaque segment élémentaire de ligne horizontale prévu pour former la ligne verticale de la mire, cette valeur correspondant au nombre d'impulsions du signal d'horloge séparant, pour chaque ligne de balayage, le début dudit segment élémentaire, du début de la portion de la ligne réservée à la visualisation de la mire,
– des premiers moyens de comptage (17) du nombre de lignes balayées sur l'écran, ces moyens de comptage étant initialisés par le signal de blank vertical et incrémentés par le signal de blank horizontal;
– des deuxièmes moyens de comptage (25) d'impulsions du signal d'horloge, ces moyens de comptage étant initialisés lorsque le spot arrive au début de la portion de chaque ligne de balayage réservée à la visualisation de la mire et incrémentés par le signal d'horloge; et
– un premier (20) et un deuxième moyen (29) de comparaison adaptés pour comparer respectivement le contenu des premiers et des deuxièmes moyens de comptage à la première et à la deuxième valeur numérique de référence, et pour produire en cas de coïncidence, lesdits premier ou deuxième signaux de déclenchement des circuits prévus pour la visualisation sur l'écran d'une ligne horizontale ou d'une ligne verticale.

2. Dispositif selon la revendication 1, caractérisé en ce qu'il comporte en outre un dispositif de sélection (27) du début de la position de chaque ligne de balayage réservée à la visualisation de la mire, ce dispositif comprenant un moyen de mémorisation d'une valeur numérique de référence de largeur de marge, cette valeur correspondant au nombre d'impulsions du signal d'horloge séparant le début du balayage de la ligne et le début choisi pour la portion réservée à la visualisation de la mire, et un moyen de comparaison adapté pour comparer à cette valeur le contenu des deuxièmes moyens de comptage et pour provoquer, en cas de coïncidence, la réinitialisation de ces moyens de comptage, ces moyens de comptage étant initialisés une première fois par le signal de synchronisation horizontale.

3. Dispositif selon l'une quelconque des revendications précédentes, caractérisé en ce que les valeurs numériques de référence sont des nombres binaires à 8 bits, et en ce que les moyens de comptage sont des compteurs binaires à 8 bits.

4. Dispositif selon l'une quelconque des revendications précédentes pour la génération d'une mire formée de deux lignes verticales et deux lignes horizontales, caractérisé en ce que les moyens de mémorisation sont prévus pour mémoriser une valeur numérique de référence pour chaque ligne de la mire.

5. Dispositif selon la revendication 4, caractérisé en ce que les moyens pour générer le signal de mire comportent des moyens de traitement de ce signal prévus pour permettre de visualiser sélectivement
- ou bien les deux lignes de mire verticales et les deux lignes de mire horizontales dans leur totalité;
- ou bien les seules positions de chaque ligne de mire non compris entre deux autres lignes perpendiculaires;
- ou bien les seules portions de chaque ligne de mire comprises entre deux autres lignes perpendiculaires.

6. Dispositif selon l'une quelconque des revendications précédentes, caractérisé en ce que les moyens pour générer le signal de mire comportent des moyens de réglage de l'épaisseur les lignes de mire agissant sur le nombre de lignes de balayage successives prévues pour former une ligne de mire horizontale, et sur la longueur des segments élémentaires de ligne de balayage prévues pour former une ligne de mire verticale.

7. Dispositif selon l'une quelconque des revendications précédentes, caractérisé en ce qu'il comporte en outre des moyens pour faire varier d'une quantité connue lesdites valeurs de référence, et provoquer ainsi des déplacements des lignes de la mire, parallèlement à elles-mêmes.

8. Dispositif selon l'une quelconque des revendications précédentes, caractérisé en ce qu'il comporte en outre une caméra de télévision (7) dont le signal commande la superposition d'une image à la mire sur l'écran, et en ce que lesdits signaux de synchronisation sont également utilisés pour synchroniser cette caméra.

**Patentansprüche**

1. Anordnung für das Erzeugen eines Fadenkreuzes auf einem Video-Monitor-Bildschirm, um die exakte Position eines Gegenstandes zu bestimmen, dessen Abbildung auf demselben Bildschirm sichtbar gemacht wird, welches Fadenkreuz mindestens eine Horizontallinie und eine Vertikallinie umfasst, die auf dem Bildschirm eine genau vorgegebene Position einnehmen, wobei der Monitor von einem Verbundsignal gesteuert ist, das insbesondere aus einem Horizontalsynchronisationssignal (SH), einem Vertikalsynchronisationssignal (SV) und einem Bildpunktintensitätssignal, vorgesehen zum Regulieren des Graupegels an jedem Punkt des Bildschirms, gebildet wird, dadurch gekennzeichnet, dass sie umfasst:
- Mittel (13) zum Erzeugen, neben den genannten Synchronisationssignalen:
  · Eines Vertikalblanksignals (BV), das für jede vollständige Bildschirmabtastsequenz den Beginn der Bildschirmzeilen definiert, die für die Darstellung des Fadenkreuzes reserviert sind;
  · eines Horizontalblanksignals (BH), das für jede Abtastsequenz einer Zeile das Ende dieser Zeile definiert und
  · eines Taktsignals (H), dessen Frequenz ein Vielfaches derjenigen der Synchronisationssignale ist
- Mittel (14) zum Erzeugen eines Fadenkreuzsignals das heisst eines Signals der Bildpunktintensität, das die Abbildung des Fadenkreuzes auf dem Bildschirm steuert, welche Mittel umfassen:
  · Für die Abbildung einer Horizontallinie des Fadenkreuzes einen Schaltkreis, ausgebildet zum Erzeugen, im Ansprechen auf ein erstes Auslösesignal eines Bildpunktintensitätssignals, entsprechend der Abbildung einer vorgegebenen Zahl von aufeinanderfolgenden Abtastzeilen auf dem Bildschirm und
  · für die Abbildung einer Vertikallinie, gebildet von einer Aufstapelung in Vertikalrichtung einer Serie von Elementarsegmenten aufeinanderfolgender Bildschirmzeilen, einen Schaltkreis, ausgebildet zum Erzeugen, im Ansprechen auf ein zweites Auslösesignal, eines Bildschirmintensitätssignals entsprechend der Abbildung eines dieser Elementarsegmente vorgegebener Länge auf dem Bildschirm;
- Speichermittel zum Abspeichern:
  · Einer ersten numerischen Referenzgrösse (21, 22), zugeordnet der Position der Horizontallinie des Fadenkreuzes, welcher Wert der Nummer der ersten Abtastzeile des Bildschirmes entspricht, welche die Horizontallinie des Fadenkreuzes bildet, wobei diese Abtastzeilen gezählt werden, ausgehend von der ersten Zeile, die von dem Vertikalblanksignal definiert wird und

· eines zweiten numerischen Referenzwertes (30, 31), zugeordnet der Position jedes Elementarsegments der Horizontalzeile, vorgesehen für die Bildung der Vertikallinie des Fadenkreuzes, welcher Wert der Anzahl von Impulsen des Taktsignals entspricht, welche für jede Abtastzeile den Beginn des besagten Elementarsegments definiert vom Beginn des Abschnitts der Zeile aus, die für die Abbildung des Fadenkreuzes reserviert ist,

– erste Zählmittel (17) für die Zahl der abgetasteten Zeilen auf dem Bildschirm, welche Zählmittel initialisiert werden von dem Vertikalblanksignal und inkrementiert werden von dem Horizontalblanksignal;

– zweite Zählmittel (25) für Impulse des Taktsignals, welche Zählmittel initialisiert werden, sobald der Bildpunkt am Beginn des Abschnitts jeder Abtastzeile eintrifft, die reserviert ist für die Abbildung des Fadenkreuzes und inkrementiert wird durch das Taktsignal und

– erste (28) und zweite (29) Komparatormittel, ausgebildet für das Vergleichen jeweils des Zählstandes des ersten bzw. zweiten Zählmittels mit dem ersten bzw. zweiten numerischen Referenzwert und zum Erzeugen, im Falle der Koinzidenz, des ersten bzw. zweiten Auslösesignals der Schaltkreise, die für die Abbildung einer horizontalen oder einer vertikalen Linie auf dem Bildschirm vorgesehen sind.

2. Anordnung nach Anspruch 1, dadurch gekennzeichnet, dass sie ferner eine Auswahleinrichtung (27) für den Beginn der Position jeder Abtastzeile, reserviert für die Abbildung des Fadenkreuzes, aufweist, welche Einrichtung ein Speichermittel für einen numerischen Referenzwert der Abstandsbreite umfasst, wobei dieser Wert der Zahl von Impulsen des Taktsignals entspricht zwischen dem Beginn der Abtastung der Zeile und dem gewählten Beginn für den für die Abbildung des Fadenkreuzes gewählten Abschnitt sowie ein Komparatormittel, ausgebildet zum Vergleich dieses Wertes mit dem Inhalt des zweiten Zählmittels und zum Bewirken, bei Koinzidenz, der Wiederinitialisierung dieser Zählmittel, welche ein erstes Mal durch das Horizontalsynchronisationssignal initialisiert werden.

3. Anordnung nach einem der vorangehenden Ansprüche, dadurch gekennzeichnet, dass die numerischen Referenzwerte Binärzahlen mit 8 Bit sind und dass die Zählmittel 8 Bit Binärzähler sind.

4. Anordnung nach einem der vorangehenden Ansprüche, zum Erzeugen eines Fadenkreuzes mit zwei Vertikallinien und zwei Horizontallinien, dadurch gekennzeichnet, dass die Speichermittel vorgesehen sind zum Speichern eines numerischen Referenzwertes für jede Linie des Fadenkreuzes.

5. Anordnung nach Anspruch 4, dadurch gekennzeichnet, dass die Mittel zum Erzeugen des Fadenkreuzsignals Mittel zur Verarbeitung dieses Signals umfassen, vorgesehen zum Ermöglichen der selektiven Abbildung

– entweder der beiden vertikalen Fadenkreuzlinien und der beiden horizontalen Fadenkreuzlinien in ihrer Gesamtheit;

– oder nur der Positionen jeder Linie des Fadenkreuzes, die nicht zwischen zwei anderen senkrechten Linien liegen;

– oder nur der Abschnitte jeder Linie des Fadenkreuzes zwischen zwei anderen senkrechten Linien.

6. Anordnung nach einem der vorangehenden Ansprüche, dadurch gekennzeichnet, dass die Mittel zum Erzeugen des Fadenkreuzsignals Mittel zum Regulieren der Dicke der Linien des Fadenkreuzes umfassen, die einwirken auf die Anzahl aufeinanderfolgender Abtastzeilen, vorgesehen für die Bildung einer horizontalen Fadenkreuzlinie und auf die Länge der Elementarsegmente der Abtastzeile, vorgesehen für die Bildung einer vertikalen Fadenkreuzlinie.

7. Anordnung nach einem der vorangehenden Ansprüche, dadurch gekennzeichnet, dass sie ferner Mittel zum Verändern einer bekannten Grösse der genannten Referenzwerte umfasst und zum entsprechenden Bewirken von Verlagerungen der Linien des Fadenkreuzes parallel zu sich selbt.

8. Anordnung nach einem der vorangehenden Ansprüche, dadurch gekennzeichnet, dass sie ferner eine Fernsehkamera umfasst, deren Signal die Überlagerung eines Bildes zu dem Fadenkreuz auf dem Bildschirm steuert und dass die genannten Synchronisationssignale zugleich für die Synchronisation dieser Kamera benutzt werden.

**Claims**

1. Arrangement for generating an alignment display on the screen of a video monitor in order to determine the exact position of an object the image of which also appears on said screen, said alignment display comprising at least one horizontal and one vertical line situated at a precisely predetermined position on the screen and the monitor being controlled by a composite signal formed in particular from a horizontal synchronization signal (SH), a vertical synchronization signal (SV) and a spot intensity signal for regulating the grey level at every point of the screen, characterized in that it comprises:

– means (13) for developing in addition to said synchronization signals:

· a vertical blanking signal (BV) defining for each complete screen scanning sequence the starting point of the screen lines reserved for the alignment display;

· a horizontal blanking signal (BH) defining for each line scanning sequence the end point of such line; and

• a clock signal (H) the frequency of which is a multiple of that of the synchronization signals;

– means (14) for generating an alignment display signal, i.e. a spot intensity signal controlling the visualisation of the alignment display, such means comprising:

• for the visualisation of a horizontal line of the alignment display, a circuit adapted to furnish in response to a first enabling signal a spot intensity signal corresponding to the visualisation on the screen of a predetermined number of successive scanning lines; and

• for the visualisation of a vertical line formed by a vertical stacking of a series of elementary segments of successive lines on the screen, a circuit adapted to furnish in response to a second enabling signal a spot intensity signal corresponding to the visualisation on the screen of one of said elementary segments of predetermined length;

– memory means for storing:

• a first digital reference value (21, 22) associated with the position of the horizontal line of the alignment display, this value corresponding to the number of the first scanning line of the screen forming the horizontal line of the alignment display such scanning lines starting from the first line defined by the vertical blanking signal; and

• a second digital reference value (30, 31) associated with the position of each elementary segment of the horizontal line provided to form the vertical line of the alignment display, this value corresponding for each scanning line to the number of clock pulses separating the beginning of the said elementary segment from the beginning of the portion of the line reserved for visualisation of the alignment display,

– first means (17) for counting the number of lines scanned on the screen, such counting means being set to an initial count by the vertical blanking signal and incremented by the horizontal blanking signal;

– second means (25) for counting the clock pulses, such counting means being set to an initial value when the spot arrives at the beginning of the portion of each scanning line reserved for visualisation of the alignment display and incremented by the clock signal; and

– a first (20) and a second (29) comparison means to compare respectively the contents of the first and second counting means with the first and second digital reference values and to generate upon coincidence said first or second enabling signal for the circuits provided for the visualisation of a horizontal line or a vertical line.

2. Arrangement according to claim 1 characterized in that it additionally comprises means (27) for selecting the starting position of each scanning line reserved for the visualisation of the alignment display, said means comprising memorization means for a digital reference value of margin width, such value corresponding to the number of clock pulses separating the beginning of the line scanning from the beginning selected for the portion reserved for the visualisation of the alignment display, and comparison means adapted for comparing the contents of the second counting means with that value and upon coincidence effecting resetting of this counting means to its initial value, said counting means being set to its initial value a first time by the horizontal synchronization signal.

3. Arrangement according to any of the preceding claims characterized in that the digital reference values are 8 bit binary numbers and in that the counting means are 8 bit binary counters.

4. Arrangement according to any ot the preceding claims for the generation of an alignment display formed from two vertical lines and two horizontal lines charcterized in that memorization means are provided for memorizing a digital reference value for each line of the alignment display.

5. Arrangement according to claim 4 characterized in that the means for generating the alignment display signal comprises means for processing this signal provided to enable selective visualisation of

– either the two vertical lines and the two horizontal lines of the alignment display in their totality;

– or only those positions of each line of the alignment display not included between two other perpendicular lines;

– or only those portions of each line of the alignment display included between two other perpendicular lines.

6. Arrangement according to any of the preceding claims characterized in that the means for generating the alignment display signal comprise means for regulating the thickness of the lines of the alignment display acting on the number of successive scanning lines provided to form a horizontal line of the alignment display and on the length of the elementary segments of the scanning line provided to form a vertical line of the alignment display.

7. Arrangement according to any of the preceding claims characterized in that it additionally comprises means to effect variation of said reference values from a known quantity thus to bring about displacements parallel to themselves of the lines of the alignment display.

8. Arrangement according to any of the preceding claims characterized in that it additionally comprises a television camera the signal of which controls the superpositioning of an image onto the alignment display on the screen and in that said synchronization signals are likewise employed to synchronize said camera.